# EUROPÄISCHE PATENTSCHRIFT

(11) **EP 1 097 634 B1**
(45) Veröffentlichungstag und Bekanntmachung des Hinweises auf die Patenterteilung: **11.12.2002**
(21) Anmeldenummer: 00114805.5
(22) Anmeldetag: 11.07.2000
(51) Int. Cl.: A01K 31/12

(54) **Sitzstange für Geflügel**
Perch for birds
Perchoir pour volailles

(30) Priorität: 05.11.1999 DE 29919443 U
(43) Veröffentlichungstag der Anmeldung: 09.05.2001
(73) Patentinhaber: Big Dutchman International GmbH, 49377 Vechta (DE)
(72) Erfinder: Otto-Lübker, Friedrich, 49635 Badbergen-Vehs (DE); Busse, Roland, 49661 Cloppenburg (DE)
(74) Vertreter: Jabbusch, Matthias

(56) Entgegenhaltungen:
- US-A- 1 643 079
- US-A- 2 280 511

## Beschreibung

Die Erfindung betrifft eine als Profil ausgebildete Sitzstange für Geflügel.

Sitzstangen für Geflügel werden beispielsweise in Geflügelställen angeordnet, um für das in diesem Stall gehaltene Geflügel einen Aufenthaltsbereich zu schaffen. Das Geflügel kann auf einer derartigen Sitzstange laufen und sitzen, beispielsweise während der Nachtruhe.

Bekannte Sitzstangen sind als symmetrische Profile ausgebildet. Sie weisen zum Beispiel kreisförmige, rechteckige oder pilzkopfförmige Querschnitte auf und sind beispielsweise als Hohlprofile oder als Vollprofile ausgebildet. Durch die symmetrische Ausbildung einer bekannten Sitzstange kann das Geflügel in zwei verschiedenen Sitzpositionen jeweils quer zur Längserstreckung der Sitzstange auf dieser sitzen. Dadurch ist bedingt, daß die Kloaken von auf der Sitzstange sitzendem Geflügel beidseitig der Sitzstange angeordnet sind. Auf nachteilige Weise sind die Kloaken somit in einem räumlich breiten Bereich angeordnet, so daß sich eine räumlich breite Zone ausbildet, in der Kot anfällt. Wenn das Geflügel eine Ruhezeit auf der Sitzstange verbracht hat, fällt nach Abschluß dieser Ruhezeit eine große Kotmenge an.
Zum Abtransport des anfallenden Kotes ist häufig vorgesehen, daß einer Sitzstange eine Kotsammelgrube oder eine Kotsammeleinrichtung, beispielsweise ein Kotsammelförderband zugeordnet ist. Dieses ist vorzugsweise unterhalb der Sitzstange angeordnet, so daß es von auf der Sitzstange aufsitzendem Geflügel herunterfallenden Kot auffangen kann. Durch die räumlich breite Zone, in der Kot anfällt, tritt der Nachteil auf, daß nicht sämtlicher Kot von der Kotsammeleinrichtung aufgefangen wird.

Ein Teil des Kotes, beispielsweise der Kot der Tiere, die in einer bestimmten Ausrichtung auf der Sitzstange sitzen, fällt am Kotband vorbei und gelangt beispielsweise in einen Einstreubereich für das Geflügel auf dem Boden des Stalles. Dies ist jedoch nachteilig, weil zu große Kotanteile im Einstreubereich gesundheitliche Probleme für die Tiere und für in dem Stall arbeitende Menschen verursachen können. Beispielsweise führt eine nicht ausreichende Abtrocknung des Kotes zu einer verstärkten Bildung und Freisetzung von Ammoniak, der über die Atemluft sowohl die Tiere als auch Menschen schädigt. Ammoniak hat einen unangenehmen Geruch, so daß nach einem Absaugen der Luft aus dem Inneren des Stalls in die Umgebung Anwohner belästigt werden, die in der Umgebung des Stalles leben. Zudem steigt das Infektions- und Hygienerisiko.

Der nicht von einer Kotsammeleinrichtung aufgefangene Kot ist daher durch zusätzlichen Aufwand aus dem Stall zu entfernen. Dieser zusätzliche Aufwand verursacht auf nachteilige Weise Kosten.

Der Erfindung liegt die Aufgabe zugrunde, eine Sitzstange der eingangs genannten Gattung aufzuzeigen, die aufgrund ihrer konstruktiven Ausbildung auf einfache Weise eine nahezu vollständige Sammlung des Kotes mit einer Kotsammeleinrichtung ermöglicht.

Diese Aufgabe ist erfindungsgemäß dadurch gelöst, daß wenigstens eine Seite des die Sitzstange ausbildenden Profils etwa gerade und als eine definierte Ausrichtung des aufsitzenden Geflügels bewirkende schräge Ebene ausgebildet ist.

Die erfindungsgemäße Sitzstange weist die konstruktive Besonderheit auf, daß sie nicht als symmetrisches Profil ausgebildet ist. Vielmehr ist eine gerade Seite des Profils als schräge Ebene ausgebildet. Diese schräge Ebene verläuft in einem Winkel zur Horizontalen, wobei die Sitzstange derart ausgerichtet wird, daß die schräge Ebene auf ihrer Oberseite angeordnet ist.

Die schräge Ebene der Sitzstange bewirkt auf vorteilhafte Weise eine Ausrichtung des auf der Sitzstange aufsitzenden Geflügels. Diese Ausrichtung wird dadurch erreicht, daß das Geflügel eine Aufsitzrichtung auf der Sitzstange als angenehme Ruheposition annimmt, während es bei einer Drehung um 180° keine bequeme Ruheposition vorfindet. Zum längeren Ruhen nimmt das Geflügel eine Haltung ein, in der die Brust erhöht breitflächig aufliegen kann. Das Geflügel wird somit eine derartige Ausrichtung annehmen, daß es jeweils seine Brust auf eine schräg aufwärts verlaufende schräge Ebene auflegen kann. Dadurch ist vorteilhaft erreicht, daß die insbesondere nebeneinander auf ein und derselben Sitzstange aufsitzenden Geflügel alle in der gleichen Richtung ausgerichtet sind, was zugleich bedingt, daß ihre Kloaken sämtlich auf einer Seite bezüglich der Sitzstange angeordnet sind. Es hat sich gezeigt, daß Tiere, die in der anderen Richtung auf der Sitzstange sitzen, nach kurzer Zeit eine Drehung um 180° vornehmen. Durch die definierte Ausrichtung des aufsitzenden Geflügels und die dadurch bedingte Anordnung ihrer Kloaken auf ein und derselben Seite der Sitzstange kann durch eine auf dieser Seite unterhalb der Sitzstange angeordnete Kotsammeleinrichtung eine nahezu vollständige Aufnahme des von den Tieren herabfallenden Kotes erfolgen. Auf besonders vorteilhafte Weise wird der Kot vollständig abtransportiert, wodurch gewährleistet ist, daß nahezu kein Kot in den Einstreubereich gelangen kann. Dadurch wird der Einstreubereich nicht durch herabfallenden Kot von auf einer Sitzstange sitzendem Geflügel verschmutzt, so daß die vorbeschriebenen Nachteile durch eine zu hohe Ansammlung von Kotanteilen im Einstreubereich nicht auftreten. Die hygienischen Bedingungen innerhalb des Geflügelstalles werden wesentlich verbessert.

Eine nahezu vollständige definierte Ausrichtung von auf der Sitzstange aufsitzendem Geflügel gelingt dann, wenn nach einer Weiterbildung der Erfindung vorgesehen ist, daß die schräge Ebene in einem Winkel von ca. 35° zur Horizontalen angestellt ist. Bei diesem Anstellungswinkel ist für die Tiere eine bequeme Ruheposition gegeben. Andererseits stellt dieser Winkel sicher, daß noch "verkehrtherum" auf der Sitzstange aufsitzendes Geflügel von dieser nicht vollständig abrutschen, diese Tiere jedoch gezwungen werden, ihre Sitzausrichtung um 180° zu drehen. Bei diesen Winkelverhältnissen ist ein sicheres Festkrallen und -halten auf der Sitzstange nur in der richtigen Aufsetzrichtung möglich. "Falschherum" sitzende Tiere laufen Gefahr, daß sie auf der Sitzstange keinen dauerhaften Halt finden. Diese Tiere ändern deshalb ihre Aufsitzrichtung.

Zur konstruktiven Ausbildung der erfindungsgemäßen Sitzstange ist nach einer Weiterbildung der Erfindung vorgesehen, daß sie etwa als U-Profil ausgebildet ist, dessen U-Basis die schräge Ebene ausbildet und dessen U-Schenkel von der U-Basis abgekantet sind. Die erfindungsgemäße Sitzstange ist hier als offenes Profil ausgebildet. Dieses kann auf einfache Weise hergestellt werden, in kurzer Zeit sind zum Beispiel durch entsprechende Umformverfahren große Mengen an U-Profilen herstellbar. Als Material für die Sitzstange kann dabei beispielsweise Aluminium, Kunststoff oder verzinktes Stahlblech dienen. Durch die Abkantung von U-Schenkeln von der U-Basis wird zumindest ein Randbereich der Sitzstange ausgebildet, hinter den das Geflügel mit seinen Krallen greifen kann. Bei einer Anordnung der schrägen Ebene schräg zur Horizontalen können die U-Schenkel vertikal nach unten verlaufen. Ein auf der Sitzstange aufsitzendes Tier greift bevorzugt mit den vorderen Krallen über den oberen Längsrand der durch die U-Basis gebildeten schrägen Ebene hinweg und faßt hinter und unter den zugeordneten U-Schenkel. Um dabei eine zu hohe Druckbelastung von Krallenbereichen des Tieres zu vermeiden, sind die Abkantungsbereiche zwischen U-Basis und U-Schenkeln vorzugsweise abgerundet ausgebildet.

Nach einer Weiterbildung der Erfindung ist vorgesehen, daß die U-Basis aus zwei Abschnitten ausgebildet ist, die in voneinander verschiedenen Winkeln zur Horizontalen angestellt sind. Dabei ist insbesondere vorgesehen, daß der vordere, obere Abschnitt der U-Basis in einem steileren Winkel zur Horizontalen angestellt ist als der hintere, untere Abschnitt. Diese Ausbildung hat den Vorteil, daß der obere Abschnitt zusammen mit dem vertikal zugeordneten, ausgerichteten U-Schenkel ein etwa symmetrisches Teilprofil ausbildet. Dieser Abschnitt des erfindungsgemäßen Profils ermöglicht ein Annähern, Greifen und Krallen von auf diesem Bereich des Profils aufsitzendem Geflügel. Der obere Abschnitt gewährleistet dabei durch die steile Anstellung zur Horizontalen, daß die Schräge der Oberfläche erhalten bleibt und die aufsitzenden Tiere somit die gewünschte Ausitzrichtung einnehmen. Das Geflügel greift mit seinen vorderen Zehen hinter diesen Abschnitt, während der hintere Zeh an den unteren Längsrand der U-Basis angenähert ist, diesen aber nicht umgreift. Der dort angeordnete U-Schenkel verhindert aber dann ein Abrutschen, wenn ein Tier hinter diesen greift, bevor es die gewünschte Ausitzrichtung einnimmt.

Die erfindungsgemäße Sitzstange kann unabhängig von weiteren Anlagen innerhalb eines Stalles in diesem angeordnet sein. Vorzugsweise ist jedoch vorgesehen, daß die erfindungsgemäße Sitzstange als Gerüstabschnitt in einer gerüstartigen Geflügelhalterungsanordnung dient. Gerüstartige Geflügelhalterungsanordnungen sind beispielsweise als Etagensysteme, sogenannte "Volieren", ausgebildet. Diese Etagensysteme bieten den Tieren verschiedene Aufenthaltsebenen, in denen sie sich aufhalten können, trinken und fressen können. Vorzugsweise werden diesen verschiedenen Ebenen der Etagensysteme erfindungsgemäße Sitzstangen zugeordnet. Diese Sitzstangen dienen zugleich als Anflugstangen für das Geflügel. Das Geflügel kann sich über mehrere, auf verschiedenen Ebenen angeordnete Sitzstangen in die Ebenen der Etagensysteme, beispielsweise zweier einander gegenüberliegend angeordneter Etagensysteme, bewegen.

Bei dem Einsatz der Sitzstange in Geflügelhalterungsanordnungen ist der durch die Sitzstange ausgebildete Gerüstabschnitt vorzugsweise oberhalb einer der Geflügelhalterungsanordnung zugeordneten Kotsammeleinrichtung angeordnet. Beispielsweise ist die Sitzstange oberhalb eines Kotbandes angeordnet, wobei sie etwas seitlich zu diesem versetzt sein kann. Dadurch ist sichergestellt, daß das Kotband unterhalb der Kloaken der auf der Sitzstange definiert ausgerichtet sitzenden Tiere angeordnet ist, so daß nahezu sämtlicher Kot aufgefangen wird. Aufgrund der definierten Ausrichtung der Tiere kann dabei die Breite des Kotbandes relativ schmal gehalten sein. Die Kosten für ein breiteres Kotsammelband werden vorteilhaft vermieden. Zugleich wird verhindert, daß Kot in den einer Geflügelhalterungsanordnung unmittelbar benachbarten Einstreubereich gelangt.

Die erfindungsgemäße Ausbildung der Sitzstange bewirkt auf vorteilhafte Weise, daß sie in einem Grenzbereich zwischen einer Kotsammeleinrichtung bzw. einer Kotgrube und einem Einstreubereich angeordnet werden kann, ohne daß die Gefahr besteht, daß Kot in größeren Mengen in den Einstreubereich gelangt. Die Sitzstange wird dazu mit ihrer schrägen Ebene so angeordnet, daß die schräge Ebene ausgehend von dem der Kotsammeleinrichtung zugeordneten Bereich schräg aufwärts verläuft. Auf der Geflügelstange aufsitzende Tiere werden aufgrund der bequemeren Position eine Richtung einnehmen, in der ihre Kloake oberhalb der Kotsammeleinrichtung angeordnet ist.

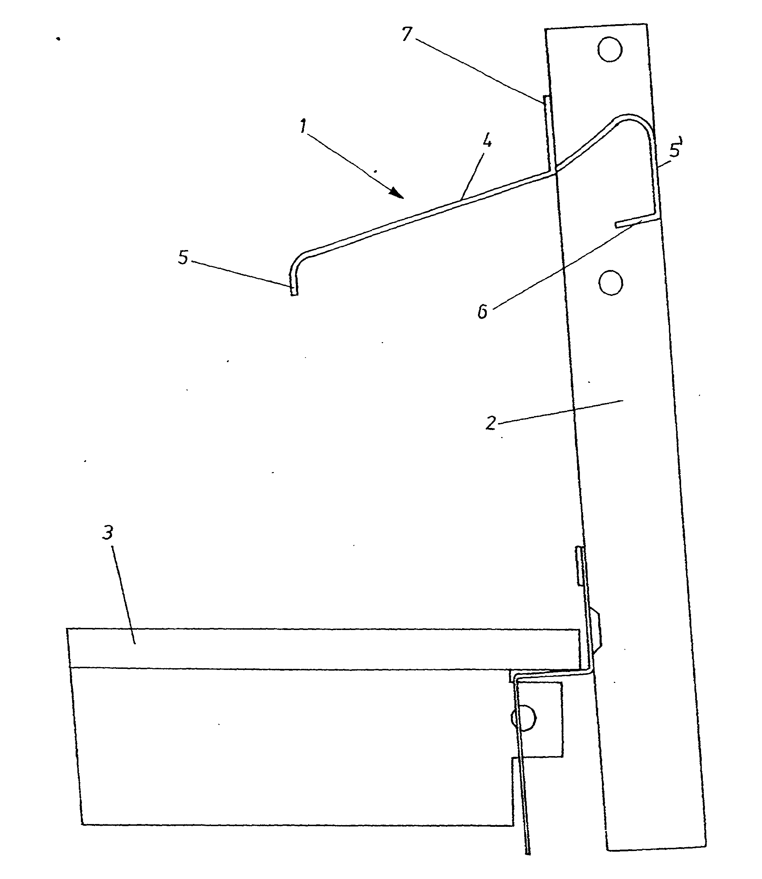

Ein Ausführungsbeispiel der Erfindung, aus dem sich weitere erfinderische Merkmale ergeben, ist in der Zeichnung dargestellt. Die Zeichnung zeigt eine Seitenansicht einer Sitzstange für Geflügel, die in einer Geflügelhalterungsanordnung angeordnet ist.

Die Sitzstange 1 ist mit nicht dargestellten Befestigungsmitteln an einer vertikal ausgerichteten Strebe 2 der gerüstartig ausgebildeten Geflügelhalterungsanordnung befestigt. Von der Geflügelhalterungsanordnung ist weiterhin ein Gitterboden 3 dargestellt, der in einer Ebene unterhalb der Sitzstange 1 gleichfalls an der Strebe 2 befestigt ist.

Die Sitzstange 1 ist etwa als U-Profil ausgebildet. Die U-Basis 4 dieses Profils bildet dabei eine schräge Ebene aus. Die schräge Ebene verläuft etwa in einem Winkel von 35° zur Horizontalen, wobei sie, ausgehend von einem Bereich oberhalb des Gitterbodens 3, schräg aufwärts verläuft. Die U-Basis 4 ist aus zwei Abschnitten gebildet, die mit voneinander verschiedenen Winkeln zur Horizontalen angestellt sind. Oberhalb des Gitterbodens 3 ist ein erster Abschnitt der U-Basis 4 angeordnet, und im Bereich der Strebe 2 ist ein zweiter Abschnitt der U-Basis 4 angeordnet. Dieser im Bereich der Strebe 2 angeordnete Abschnitt weist einen größeren Neigungswinkel zur Horizontalen auf als der andere Abschnitt.

Von der U-Basis 4 sind im Bereich ihrer Ränder U-Schenkel 5, 5' angekantet. Die Abkantungsbereiche zwischen der U-Basis und den U-Schenkeln 5, 5' sind abgerundet ausgebildet. Der U-Schenkel 5' weist einen in Richtung des U-Schenkels 5 abgekanteten Bereich 6 auf, der etwa parallel zur U-Basis 4 verläuft.

Aus der U-Basis 4 ist eine Zunge 7 in eine vertikal ausgerichtete Ebene abgekantet. Mit dieser Zunge 7 kann die Sitzstange 1 an der Strebe 2 befestigt werden. Die Sitzstange 1 kann dabei zwischen einander benachbarten Streben einer Geflügelhalterungsanordnung verlaufen, wobei im Bereich jeder Strebe 2 eine entsprechende Zunge 7 zur Befestigung der Sitzstange 1 vorgesehen ist. Die Zunge 7 ist somit nur im Bereich einer Strebe 2 ausgebildet, sie verläuft nicht über die gesamte Erstreckung der Sitzstange 1.

Die Sitzstange 1 kann von Tieren angeflogen werden und als Aufenthaltsbereich genutzt werden. Aufgrund der schrägen Ebene der Sitzstange 1 wird aufsitzendes Geflügel dabei in eine definierte Ausrichtung gebracht. Das Geflügel sitzt mit einer Ausrichtung auf der Sitzstange 1, bei der ihre Kloaken oberhalb des Bodens 3 angeordnet sind. Andersherum sitzende Tiere finden auf der Sitzstange 1 keinen bequemen Halt, so daß sie ihre Sitzposition um 180° drehen.

Unter dem Gitterboden 3 kann eine geeignete Kotsammeleinrichtung angeordnet sein bzw. es kann an Stelle des Gitterbodens 3 eine Kotsammeleinrichtung vorgesehen sein. Diese nimmt den Kot, der von den auf der Sitzstange 1 aufsitzenden Tieren herabfällt, nahezu vollständig auf.

Die Sitzstange 1 kann eine Gesamtbreite von ca. 100 mm aufweisen. Der Abschnitt der U-Basis 4 mit der geringeren Neigung ist dabei etwa 69 mm lang, während der andere Abschnitt etwa 22 mm lang ist. Die abgerundeten Übergangsbereiche zwischen der U-Basis 4 und den U-Schenkeln 5, 5' können einen Radius von 5 mm aufweisen. Die freien Kanten des U-Schenkels 5 sowie des Abschnittes 6 des U-Schenkels 5' sind entgratet, um ein Verletzungsrisiko für hinter diese Kanten greifende Krallenbereiche von auf der Sitzstange 1 aufsitzenden Tieren auszuschließen.

## Patentansprüche

1. Als Profil ausgebildete Sitzstange (1) für Geflügel,
**dadurch gekennzeichnet,**
**daß** wenigstens eine Seite des Profils etwa gerade und als eine definierte Ausrichtung des aufsitzenden Geflügels bewirkende schräge Ebene ausgebildet ist.

2. Sitzstange nach Anspruch 1, **dadurch gekennzeichnet, daß** die schräge Ebene in einem Winkel von ca. 35° zur Horizontalen angestellt ist.

3. Sitzstange nach Anspruch 1 oder 2, **dadurch gekennzeichnet, daß** sie etwa als U-Profil ausgebildet ist, dessen U-Basis (4) die schräge Ebene ausbildet und dessen U-Schenkel (5, 5') von der U-Basis (4) abgekantet sind.

4. Sitzstange nach Anspruch 3, **dadurch gekennzeichnet, daß** die U-Basis (4) aus zwei Abschnitten ausgebildet ist, die in voneinander verschiedenen Winkeln zur Horizontalen angestellt sind.

5. Sitzstange nach Anspruch 3 oder 4, **dadurch gekennzeichnet, daß** die Abkantungsbereiche zwischen U-Basis (4) und U-Schenkeln (5, 5') jeweils abgerundet ausgebildet sind.

6. Sitzstange nach einem der vorhergehenden Ansprüche, **dadurch gekennzeichnet, daß** sie als Gerüstabschnitt einer gerüstartigen Geflügelhalterungsanordnung ausgebildet ist.

7. Sitzstange nach Anspruch 6, **dadurch gekennzeichnet, daß** der durch sie ausgebildete Gerüstabschnitt oberhalb einer der Geflügelhalterungsanordnung zugeordneten Kotsammeleinrichtung angeordnet ist.

## Claims

1. Perch (1) for poultry which is designed as a profile, **characterized in that** at least one side of the profile is designed in an approximately rectilinear manner and as a sloping plane which causes the poultry sitting on it to be aligned in a defined manner.

2. Perch according to Claim 1, **characterized in that** the sloping plane is set at an angle of approximately 35° in relation to the horizontal.

3. Perch according to Claim 1 or 2, **characterized in that** it is designed approximately as a U-profile, of which the U-base (4) forms the sloping plane and the U-legs (5, 5') are angled from the U-base (4).

4. Perch according to Claim 3, **characterized in that** the U-base (4) is formed from two sections which are set at differing angles in relation to the horizontal.

5. Perch according to Claim 3 or 4, **characterized in that** the angled regions between the U-base (4) and U-legs (5, 5') are of rounded design in each case.

6. Perch according to one of the preceding claims, **characterized in that** it is in the form of a framework section of a framework-like poultry-holding arrangement.

7. Perch according to Claim 6, **characterized in that** the framework section formed by it is arranged above an excrement-collecting device assigned to the poultry-holding arrangement.

## Revendications

1. Perchoir (1) conformé en profilé pour volailles, **caractérisé en ce qu'**au moins un côté du profilé est approximativement rectiligne et est conformé en plan oblique provoquant une orientation définie de la volaille perchée.

2. Perchoir selon la revendication 1, **caractérisé en ce que** le plan oblique est incliné par rapport à l'horizontale, suivant un angle d'environ 35°.

3. Perchoir selon la revendication 1 ou 2, **caractérisé en ce qu'**il est conformé approximativement en profilé en U dont la base du U (4) forme le plan oblique et dont les branches du U (5, 5') sont repliées de la base du U (4).

4. Perchoir selon la revendication 3, **caractérisé en ce que** la base du U (4) est constituée de deux parties qui sont inclinées par rapport à l'horizontale suivant des angles différents l'un de l'autre.

5. Perchoir selon la revendication 3 ou 4, **caractérisé en ce que** les zones de pliage entre la base du U (4) et les branches du U (5, 5') sont arrondies.

6. Perchoir selon l'une des revendications précédentes, **caractérisé en ce qu'**il est réalisé en tant que partie de cage d'un dispositif d'enfermement de volaille de type cage.

7. Perchoir selon la revendication 6, **caractérisé en ce que** la partie de cage, formée par ce perchoir, est disposée au-dessus d'un dispositif de collecte d'excréments associé au dispositif d'enfermement de volaille.
